# EUROPEAN PATENT APPLICATION

(11) **EP 2 474 664 A1**
(43) Date of publication of application: **11.07.2012**
(21) Application number: 11150284.5
(22) Date of filing: 06.01.2011
(51) Int. Cl.: D21B 1/08, B29B 17/04

(54) **Mixture of plastic and paper-based materials and method for making it**

(71) Applicant: DQ Concepts B.V., 2271 CA Voorburg (NL)
(72) Inventor: Nossbaum, Frits Daniël, 2271 CA Voorburg (NL); Van Duijn, Leendert, 2215 GP Voorhout (NL)
(74) Representative: De Vries & Metman

(57) **Abstract**

A mixture of materials for use in a moulding process is provided, which mixture comprises material particles having a volume of at most 125 mm³ and which mixture comprises, per weight, at least between 30% and 95% plastic material and between 70% and 5% paper-based material, and preferably at least 40% plastic material and at most 60% paper-based material. A method for the manufacture of such a mixture of materials for use in a moulding process comprises the step of providing base materials in amounts for achieving the desired percentages, per weight, of the materials in the mixture and a step of decreasing the dimensions of the base materials for obtaining particles having a volume of at most 125 mm³.

## Description

The invention firstly relates to a mixture of materials for use in a moulding process.

In modern industry the recycling of used base materials plays an increasingly important role. One important source of recycled base materials comprises laminated packaging materials based on paper or cardboard (hereinafter generally indicated as paper-based material). Such packaging materials are used on a large scale for manufacturing packs for packaging dairy products and juices, among others. Often, such packs are provided with closable plastic spouts, for example made of polypropylene. The laminated packaging materials further may comprise small amounts of metals, such as thin aluminium foils attached to the remainder of the packaging material (by techniques as, for example, laminating, extruding and sputtering), in which case the packaging materials often are used for producing air-tight bags, for example for consumer food products or for animal food products.

Nowadays, such packs only are recycled in a limited amount. A greater part of such used packs simply is burnt in an industrial incinerator or dumped at a garbage dump. Only a smaller part is recycled, comprising a delaminating process separating the constitutive layers of the packaging materials. Thereafter the obtained separate materials may be used in appropriate processes.

It is an object of the invention to provide a mixture of materials for use in a moulding process which makes it possible to use recycled base materials, especially (but not exclusively) of the above mentioned type, on a larger scale then nowadays attainable.

Thus, in accordance with the present invention a mixture of materials for use in a moulding process is provided, which mixture comprises material particles having a volume of at most 125 mm³ and which mixture comprises, per weight, at least between 30% and 95% plastic material and between 70% and 5% paper-based material.

Such a mixture can be obtained directly from the above mentioned packs for dairy products and juices or from the above mentioned bags for consumer or animal food products. The composition of such packs and bags (including any spouts, if provided) falls within the weight percentage composition of such a mixture, and for obtaining a mixture that can be used in a moulding process it is only necessary to ensure that the mixture comprises material particles (obtained by any appropriate process for decreasing the dimensions of the original material) with a volume of at most 125 mm³. The material particles may be as small to define a powdery material.

In accordance with the present invention incinerating, dumping or separating the constitutive layers of such packs is no longer required. The obtained mixture may be used directly in a moulding process for the manufacture of new products, such as an extrusion process or an injection moulding process. Even small residues of other materials in the mixture, such as ink residues, may be allowed without negatively influencing the properties of the final products.

In a preferred embodiment of the mixture according to the present invention it comprises at least 40% plastic material and at most 60% paper-based material. As a result the moulding process will yield a product with good properties (especially a product which is not too brittle).

In accordance with another embodiment of the present invention the mixture further may comprise up to 5% of a metal. The metal in such a case may comprise an aluminium-based material, e.g. an aluminium sheet material.

In one embodiment of the mixture according to the present invention the plastic material comprises any of the group comprising, at least, polyethylene (PE), polypropylene (PP), expanded polypropylene (EPP), polyethyleneterephthalate (PET), polystyrene (PS), expanded polystyrene (EPS) or polyamide (PA) . But also other plastics may be present.

For obtaining desired characteristics of the moulded products the mixture further may comprise as additives any of odouring agents, colouring agents and strength increasing agents, such as glass fibre, or any other required agents.

The invention secondly relates to a method for the manufacture of a mixture of materials for use in a moulding process according to the present invention. This method comprises the step of providing base materials in amounts for achieving the desired percentages, per weight, of the materials in the mixture and a step of decreasing the dimensions of the base materials for obtaining particles having a volume of at most 125 mm³.

In a preferred embodiment of said method the step of decreasing the dimensions of the base materials comprises feeding the base materials to a device for mechanically decreasing the dimensions by a process belonging to the group at least comprising cutting, punching, shredding and milling. This embodiment is particularly suited when new or substantially new laminated base materials are used for the manufacture of the mixture. Such a step may be followed by a step of drying the mixture, but such a drying step is not absolutely necessary.

Especially when using used laminated base materials, the step of mechanically decreasing the dimensions may be preceded by the step of flattening at least a part of the base materials. During such flattening any residual materials present on the base materials (e.g. remains of fluid or liquid substances contained in the packs or bags) are removed and collected (and may be used as additives in food or cultivation products, e.g. in the animal food industry).

In yet another embodiment of the present method the particles after the step of mechanically decreasing the dimensions are fed to an extrusion press and are extruded as a profile by a temperature in a range from 200°C to 350°C, whereafter the extruded profile is divided into a granulate.

Such a granulate may be used as a base material or as a filler in combination with other injection moulding or extrusion materials. Additives may be added to the granulate, as mentioned before with respect to the mixture. The mixture or granulate also may be fit to be used by blow/rotation moulding processes.

In a preferred embodiment of the previously mentioned method the temperature ranges from 220°C to 300°C.

In another embodiment of said method the extrusion press has a circular extrusion opening with a diameter ranging from 2 to 4 mm. This yields an extrusion profile which can be easily divided into the required granulate, for example by cutting the profile in lengths of 2 to 4 mm. Milling the profile, however, is possible too.

The method further may comprise at least one of the steps of washing and drying the particles.

In a commonly used embodiment of the method according to the present invention, the step of providing base materials in amounts for achieving the desired percentages, per weight, of the materials in the mixture is fully completed before the step of decreasing the dimensions of the base materials. This, generally, will be the case if the base materials sprout from packs or bags as mentioned above which already comprise the materials for the mixture in the desired weight composition.

However, it is possible too that the step of providing base materials in amounts for achieving the desired percentages, per weight, of the materials in the mixture is partially completed before the step of decreasing the dimensions of the base materials and is fully completed after the step of decreasing the dimensions of the base materials by adding an additional amount of new, regenerated or milled plastic particles to the particles obtained by the step of decreasing the dimensions of the base materials. Thus, in accordance with such an embodiment the base materials provided in amounts for achieving the desired percentages, per weight, of the materials in the mixture firstly comprise the base materials provided before the step of decreasing the dimensions of such base materials, and secondly the added plastic particles. Such an embodiment may be used when the base materials provided before the step of decreasing the dimensions do not fulfil the desired weight composition in the mixture (for example when the fraction of paper-based material is too large) to be used successfully in a moulding process.

In case of such an embodiment of the method it is preferred that the added plastic particles comprise plastics of the group of, among others, PE, PP, EPP, PET, PA, PS or EPS. But also other plastic materials are conceivable.

In an embodiment of the method according to the present invention wherein one of the base materials is a laminated sheet material, previous to the step of decreasing the dimensions of the base materials the components of said laminated sheet material may be fused by combined compressing and heating. Thus the materials are interconnected by a fusion process which yield a good starting material for the production of the granulate.

In such an embodiment of the method it is possible that during to the step of decreasing the dimensions of the fused sheet material particles are obtained with a volume of at least 1 mm³.

Hereinafter the invention will be elucidated while referring to the drawing, in which:
Figures 1 and 2 show examples of objects to be used for the manufacture of the mixture of materials according to the present invention;
Figure 3 shows examples of possible shapes of material particles in such a mixture, and
Figures 4-7 show different embodiments of the method according to the present invention.

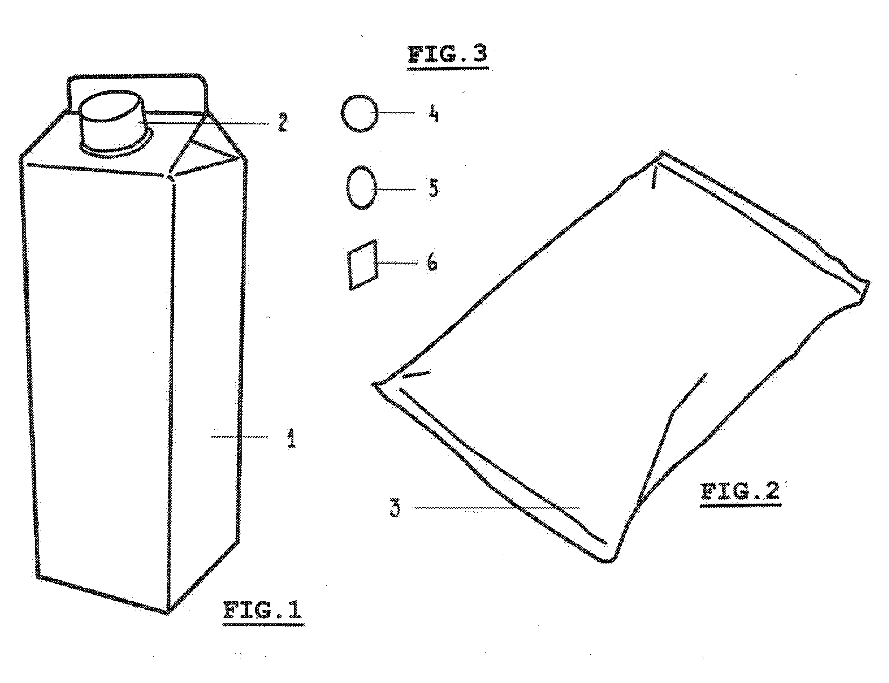

Firstly referring to figure 1, a dairy pack (e.g. milk pack) is illustrated which, as know per se, comprises a laminated material 1 (for example comprising from the outside to the inside PE, cardboard and PE. In case the pack is used for juice the layers may comprise, for example, PE, cardboard, a ferro or non-ferro metal layer (preferably aluminium) and PE. The metal layer may be provided by any appropriate process, such as for example extrusion, laminating, metallisation or sputtering. The pack further comprises a closable pouring spout 2, for example manufactured from PP and/or PE.

Figure 2 illustrates a bag which may be used, for example, for packaging consumer or animal food products. This bag may be manufactured from a laminated material 3, may comprise one or more plastic layers (e.g. PET, PE or PP) and may be combined with a paper layer and/or a metal layer (which may be provided by any appropriate process, such as for example extrusion, laminating, metallisation or sputtering).

The objects according to figures 1 and 2 may be cut, shredded, punched, milled or otherwise treated to obtain particles with a volume of at most 125 mm³. Such a process may be realised by an appropriate device (although it is conceivable that the process is carried out manually too). Examples of such particles are illustrated in figure 3 (4 round, 5 oval and 6 rhombic). Apart from the illustrated, basically flat particles also complicated curved, non-flat particles are conceivable (e.g. folded, rolled-up, twisted). But the particles also may be provided as a powder.

The step of providing base materials in amounts for achieving the desired percentages, per weight,of the materials in a mixture as explained below may be fully completed before the step of decreasing the dimensions of the base materials.

However, according to an alternative embodiment the step of providing base materials in amounts for achieving the desired percentages, per weight, of the materials in the mixture is only partially completed before the step of decreasing the dimensions of the base materials and is fully completed after the step of decreasing the dimensions of the base materials by adding an additional amount of new, regenerated or milled plastic particles to the particles obtained by the step of decreasing the dimensions of the base materials. Thus the objects may directly (or indirectly by the addition of extra material) yield a mixture of material particles having a volume of at most 125 mm³. The mixture comprises, per weight, at least between 30%and 95% plastic material and between 70% and 5% paper-based material.

Preferably the mixture comprises at least 40% plastic material and at most 60% paper-based material, and depending on the case up to 5% of a metal, such as aluminium. It is possible to add additives such as odouring agents, colouring agents and strength increasing agents, such as glass fibre.

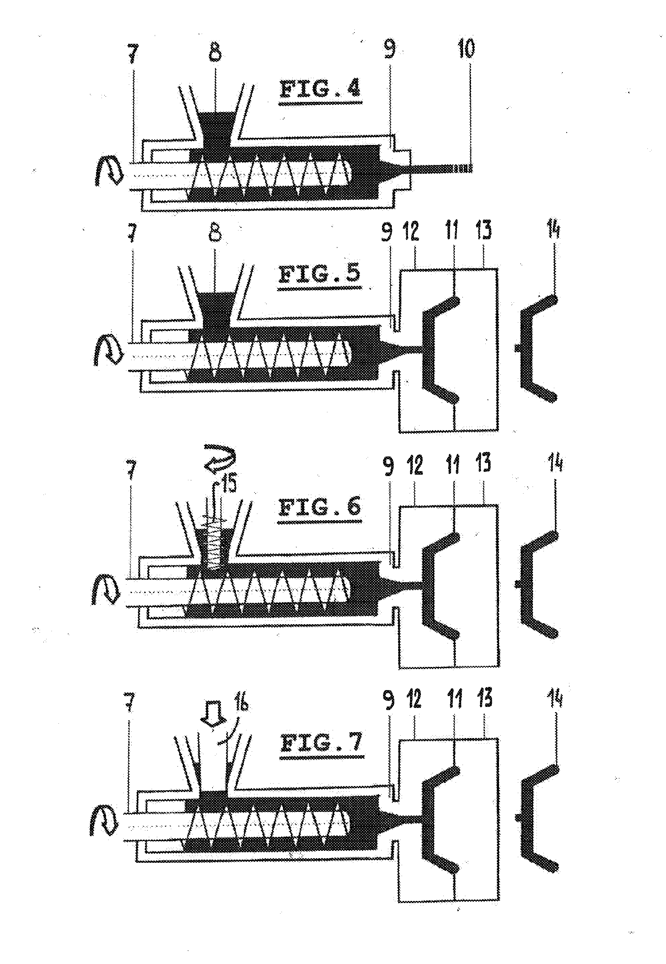

Figure 4 shows an extrusion press 7 for carrying out a first embodiment of the method according to the invention. A mixture of particles 8 as mentioned above (thus obtained directly or indirectly by adding additional material as explained above) is fed into the feed hopper of the extrusion press and is discharged by the extrusion opening 9 as an extrusion profile. This extrusion profile is cut into granulate particles 10 (preferably having a length between 2 and 4 mm). This granulate may be used as a base material in a further process.

The extrusion press operates in a temperature range from 200°C to 350°C, and preferably from 220°C to 300°C. The extrusion press 7 may have a circular extrusion opening 9 with a diameter ranging from 2 to 4 mm.

Figure 5 shows an embodiment, in which the extruded material leaving the extrusion opening 9 enters a cavity 11 between to mould parts 12 and 13 for directly manufacturing a product 14. After the product 14 is formed (i.e. has cooled sufficiently) the mould parts 12 and 13 are moved apart and the product is discharged from the mould. The mould parts 12 and 13 then are moved towards each other again for forming a next product.

In Figure 6 the mixture of particles 8 is fed by use of a turning screw 15, whereas in figure 7 a press 16 is used. Such embodiments are advantageous when the material fed to the extruder is very light.

The invention is not limited to the embodiments described before which may be varied widely within the scope of the invention as defined by the appending claims. For example it is possible that the step of mechanically decreasing the dimensions is preceded by the step of flattening at least a part of the base materials.

## Claims

1. Mixture of materials for use in a moulding process, which mixture comprises material particles having a volume of at most 125 mm³ and which mixture comprises, per weight, at least between 30% and 95% plastic material and between 70% and 5% paper-based material.

2. Mixture according to claim 1, comprising at least 40% plastic material and at most 60% paper-based material.

3. Mixture according to claim 1 or 2, further comprising up to 5% of a metal.

4. Mixture according to claim 3, wherein the metal comprises an aluminium-based material.

5. Mixture according to any of the previous claims, wherein the plastic material comprises any of the group comprising, at least, polyethylene (PE), polypropylene (PP), expanded polypropylene (EPP), polyethyleneterephthalate (PET), polystyrene (PS), expanded polystyrene (EPS) or polyamide (PA).

6. Mixture according to any of the previous claims, further comprising as additives any of odouring agents, colouring agents and strength increasing agents, such as glass fibre.

7. Method for the manufacture of a mixture of materials for use in a moulding process according to any of the previous claim, comprising the step of providing base materials in amounts for achieving the desired percentages, per weight, of the materials in the mixture and a step of decreasing the dimensions of the base materials for obtaining particles having a volume of at most 125 mm³.

8. Method according to claim 7, wherein the step of decreasing the dimensions of the base materials comprises feeding the base materials to a device for mechanically decreasing the dimensions by a process belonging to the group
at least comprising cutting, punching, shredding and milling.

9. Method according to claim 8, wherein the step of mechanically decreasing the dimensions is preceded by the step of flattening at least a part of the base materials.

10. Method according to claim 8 or 9, wherein the particles after the step of mechanically decreasing the dimensions are fed to an extrusion press and are extruded as a profile by a temperature in a range from 200°C to 350°C, profile by a temperature in a range from 200°C to 350°C, whereafter the extruded profile is divided into a granulate.

11. Method according to claim 10, wherein the temperature ranges from 220°C to 300°C.

12. Method according to claim 10 or 11, wherein the extrusion press has a circular extrusion opening with a diameter ranging from 2 to 4 mm, and wherein preferably the extruded profile is cut in lengths of 2 to 4 mm.

13. Method according to any of the claims 7-12, further comprising at least one of the steps of washing and drying the particles.

14. Method according to any of the claims 7-13,
wherein the step of providing base materials in amounts for achieving the desired percentages, per weight, of the materials in the mixture is fully completed before the step of decreasing the dimensions of the base materials.

15. Method according to any of the claims 7-13,
wherein the step of providing base materials in amounts for achieving the desired percentages, per weight, of the materials in the mixture is partially completed before the step of decreasing the dimensions of the base materials and is fully completed after the step of decreasing the dimensions of the base materials by adding an additional amount of new, regenerated or milled plastic particles to the particles obtained by the step of decreasing the dimensions of the base materials.

16. Method according to claim 15, wherein the added plastic particles comprise plastics of the group of, among others, PE, PP, EPP, PET, PA, PS or EPS.

17. Method according to any of the claims 7-16,
wherein one of the base materials is a laminated sheet material and wherein previous to the step of decreasing the dimensions of the base materials the components of said laminated sheet material are fused by combined compressing and heating.

18. Method according to step 17, wherein during to the step of decreasing the dimensions of the fused sheet material particles are obtained with a volume of at least 1 mm³.
